# EUROPEAN PATENT APPLICATION

(11) **EP 4 836 428 A1**
(43) Date of publication of application: **04.11.2026**
(21) Application number: 24910269.0
(22) Date of filing: 30.10.2024
(51) Int. Cl.: H04N 21/44

(54) **MULTIMEDIA DATA STREAM PROCESSING METHOD AND APPARATUS, ELECTRONIC DEVICE, AND STORAGE MEDIUM**

(30) Priority: 29.12.2023 CN 202311868465
(71) Applicant: Beijing Zitiao Network Technology Co., Ltd., Beijing 100190 (CN)
(72) Inventor: XING, Weike, Beijing 100028 (CN)
(74) Representative: Isarpatent
(86) International application number: PCT/CN2024/128354
(87) International publication number: WO 2025/139330

(57) **Abstract**

Embodiments of the present disclosure provide a multimedia data stream processing method and apparatus, an electronic device, and a storage medium. The method includes: obtaining a multimedia data stream; and sending the obtained multimedia data stream to a target device in response to receiving a target request, to cause the target device to perform rendering processing on the multimedia data stream based on the target request, to obtain a multimedia data stream to be pushed.

## Description

### CROSS-REFERENCE TO RELATED APPLICATION(S)

The present application claims priority to Chinese Patent Application No. 202311868465.4, filed on December 29, 2023 and entitled "MULTIMEDIA DATA STREAM PROCESSING METHOD AND APPARATUS, ELECTRONIC DEVICE, AND STORAGE MEDIUM", which is incorporated herein by reference in its entirety.

### FIELD

Embodiments of the present disclosure relate to the technical field of data processing, and in particular to a multimedia data stream processing method and apparatus, an electronic device, and a storage medium.

### BACKGROUND

With the rapid development of computer technology and Internet technology, various service scenarios continue to emerge. In service scenarios, scenario functions and interaction manners with users are often enriched through a plurality of associated scenario services. For example, by inputting an interaction request associated with a livestream page, an effect corresponding to the interaction request may be rendered on the livestream page.

### SUMMARY

The present disclosure provides a multimedia data stream processing method and apparatus, an electronic device, and a storage medium, to achieve effective rendering of video content without imposing requirements on terminal device performance, thereby improving the universality and efficiency of video processing.

According to a first aspect, the present disclosure provides a multimedia data stream processing method. The method includes:
obtaining a multimedia data stream, where the multimedia data stream includes an audio stream and/or a video stream; and
sending the obtained multimedia data stream to a target device in response to receiving a target request, to cause the target device to perform rendering processing on the multimedia data stream based on the target request, to obtain a multimedia data stream to be pushed.

According to a second aspect, an embodiment of the present disclosure further provides a multimedia data stream processing apparatus. The apparatus includes:
a data stream obtaining module, configured to obtain a multimedia data stream, where the multimedia data stream comprises an audio stream and/or a video stream; and
a data stream sending module, configured to send the obtained multimedia data stream to a target device in response to receiving a target request, to cause the target device to perform rendering processing on the multimedia data stream based on the target request, to obtain a multimedia data stream to be pushed.

According to a third aspect, an embodiment of the present disclosure further provides an electronic device. The electronic device includes:
one or more processors; and
a storage configured to store one or more programs, where
the one or more programs, when executed by the one or more processors, cause the one or more processors to implement the multimedia data stream processing method according to any of the embodiments of the present disclosure.

According to a fourth aspect, an embodiment of the present disclosure further provides a storage medium including computer-executable instructions. The computer-executable instructions, when executed by a computer processor, perform the multimedia data stream processing method according to any of the embodiments of the present disclosure.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a multimedia data stream processing method according to an embodiment of the present disclosure;
FIG. 2 is a schematic flowchart of another multimedia data stream processing method according to an embodiment of the present disclosure;
FIG. 3 is a schematic flowchart of a multimedia data stream processing method according to an embodiment of the present disclosure;
FIG. 4 is a schematic structural diagram of a multimedia data stream processing apparatus according to an embodiment of the present disclosure; and
FIG. 5 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

Generally, rendering of a livestream page mainly relies on processing by a client to which the livestream page belongs. In this case, high performance is required from a terminal device, resulting in high video processing costs and poor universality.

Before the technical solutions are described, an exemplary description of the application scenario may be provided. The technical solutions can be applied to any scenario requiring real-time rendering processing of a multimedia data stream, such as a livestream scenario, a real-time video processing scenario, or a real-time audio processing scenario. To more clearly illustrate the technical solutions, the livestream scenario may be taken as an example to describe the execution process of the technical solutions. For other real-time rendering processing scenarios of data streams, reference may be made to the multimedia data stream rendering processing procedure in the livestream scenario. For example, during a live stream, a multimedia data stream of a streamer may be obtained and processed based on a livestream client. However, when the streamer or a viewer triggers an interactive control on the livestream page, in the case that processing content corresponding to the interactive control is complex and time-consuming, the processing still needs to be performed by the livestream client. In this case, high performance is required from the livestream client, that is, the processing heavily relies on the hardware equipment of the livestream client. Further, if the performance of the livestream client is insufficient, problems such as stuttering, latency, and content lag may occur on the livestream page, which leads to poor image effects of the live stream.

In this case, according to the technical solutions of the embodiments of the present disclosure, a livestream image may be obtained, and then, when it is detected that an interaction request associated with the livestream image is a target request, the obtained livestream image may be sent to a target device with better performance that belongs to the same local area network as the livestream client, to cause the target device to perform rendering processing on the obtained livestream image based on the target request.

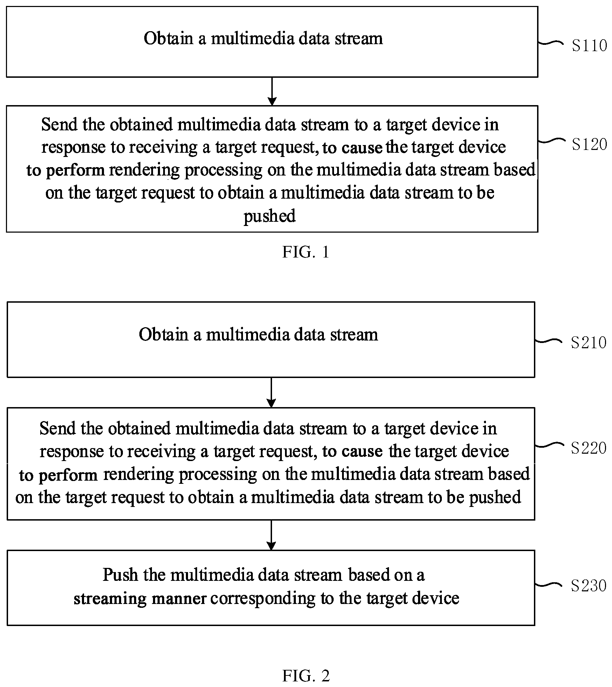

FIG. 1 is a schematic flowchart of a multimedia data stream processing method according to an embodiment of the present disclosure. This embodiment of the present disclosure is applicable to any scenario requiring real-time rendering of data streams. The method may be performed by a multimedia data stream processing apparatus. The apparatus may be implemented in the form of software and/or hardware. Optionally, the apparatus is implemented by using an electronic device. The electronic device may be a mobile terminal, a PC terminal, a server, or the like.

As shown in FIG. 1, the method in this embodiment may specifically include the following steps.

S110: a multimedia data stream is obtained.

It should be noted that there may be at least two devices executing the technical solutions provided in this embodiment of the present disclosure. One of the two devices may be a device for obtaining a multimedia data stream, and the other may be a device for processing the obtained multimedia data stream. To improve universality, optionally, the data stream obtaining device may be a terminal device. The device for processing the multimedia data stream may be a device with high processing performance that belongs to the same local area network, such as a terminal device or a server.

The multimedia data stream may be a data stream including at least one media type (e.g., image, text, audio, video, etc.). In this embodiment, the multimedia data stream may include an audio stream and/or a video stream. The audio stream may be understood as a data stream including an audio. The video stream may be understood as a data stream including an video. It should be noted that in a livestream scenario, the multimedia data stream may be a livestream image and audio information simultaneously presented on a livestream page; and in an audio real-time processing scenario, the multimedia data stream may be audio information.

S120: the obtained multimedia data stream is sent to a target device in response to receiving a target request, to cause the target device to perform rendering processing on the multimedia data stream based on the target request, to obtain a multimedia data stream to be pushed.

In this embodiment, when presenting a livestream page corresponding to the multimedia data stream, a streamer or a viewer may trigger a corresponding operation on the livestream page. Then, a request may be generated based on the corresponding operation, and the generated request may be used as the target request. In other words, detection may be performed continuously or periodically for the target request acting on a multimedia data stream presentation page. Then, in response to receiving the target request, effects corresponding to the target request may be rendered on the presentation page. Generally, the image content to be rendered for the target request at this stage is relatively time-consuming. The multimedia data stream may be sent to the target device, to cause another higher-performance device to be able to perform rendering processing.

The target request may be understood as an interaction request associated with the multimedia data stream. Generally, a multimedia data stream presentation process may involve a source end of the multimedia data stream and a viewing end of the multimedia data stream. Both ends may input requests to the multimedia data stream presentation page. At least part of the requests input by at least one of the both ends toward the multimedia data stream presentation page may be determined as target requests. Optionally, the target requests may include requests initiated by a first user and/or a second user acting on the livestream page. The target requests may include a plurality of types. Optionally, the target requests may include at least one of a rendering effect request, a resource transfer request, or a livestream interaction request.

The first user may be any user associated with the multimedia data stream presentation process. Optionally, the first user may be a streamer of a livestream room. The second user may also be any user associated with the multimedia data stream presentation process. For example, the second user may be a user who views the livestream page of the livestream room corresponding to the first user that is presented on a terminal display interface of the second user, such as a viewer of the live stream of the streamer. The livestream page is a page for presenting the multimedia data stream. The livestream page may be understood as a page that can be presented in the associated terminal display interface during the live stream, and the page may include a livestream data stream corresponding to the first user or the second user.

The rendering effect request may be understood as a request that requires performing effect processing on content on the livestream page or a request for displaying effects on the livestream page. For example, the rendering effect request may be a request corresponding to the case of triggering a hair accessory effect control.

The resource transfer request may be understood as a request for transferring an associated interactive service and resource; optionally, it may be a request corresponding to gifting. The resource transfer request may be a request for transferring a resource from a resource sender to a resource receiver, where the resource may be an interactive gift, a virtual resource, or the like. In practical applications, when a trigger operation for an associated control for resource transfer is detected, the trigger operation may be responded to, and a preset animation or a preset image corresponding to the associated control may be rendered on the livestream page.

The livestream interaction request may be understood as a request generated during interactions between a streamer end and a viewer end, or between streamer ends, or between viewer ends, during the live stream of the streamer. For example, the livestream interaction request may include posting a comment.

It should be noted that a request object corresponding to the rendering effect request, the resource transfer request, and the livestream interaction request may be at least one of the first user and the second user. In other words, either the first user or the second user may send the rendering effect request, the resource transfer request, or the livestream interaction request, to render corresponding information on the livestream page in response to receiving the corresponding target request. The benefits of such a configuration are as follows: the performance of the application software in rendering visual content corresponding to the interaction requests is improved, and the range of the interaction requests for which visual content can be rendered is expanded, and the user experience and interaction experience are enhanced.

In this embodiment, the obtained multimedia data stream is sent to the target device in response to receiving the target request, to cause the target device to perform rendering processing on the multimedia data stream based on the target request, to obtain the multimedia data stream to be pushed.

The target device may be understood as an electronic device that is associated with a client to which the multimedia data stream belongs and has higher performance than the client. Optionally, the target device is a device satisfying preset processing conditions. The preset processing conditions may be that the performance of the device is higher than that of the associated client to which the multimedia data stream belongs. In this embodiment, the streamer end obtaining the multimedia data stream and the target device correspond to the same local area network. That is, the distance between the client and the target device may fall within the coverage corresponding to a local area network. The target device may be any electronic device with performance higher than the client to which the multimedia data stream belongs. Optionally, the target device may be a server, a PC terminal, a cloud, or the like. The multimedia data stream to be pushed may be understood as a data stream that is obtained after rendering processing of the multimedia data stream and is in a state awaiting pushing. It should be noted that, in the case that the method is applied to the streamer end, the multimedia data stream to be pushed is a data stream to be pushed to the streamer end and/or the viewer end. That is, in response to obtaining the multimedia data stream to be pushed, the multimedia data stream may be pushed to the streamer end and/or the viewer end based on a corresponding streaming manner.

It should be noted that in the related art, in response to receiving the target request, the client to which the multimedia data stream belongs generally performs rendering processing on the obtained multimedia data stream based on the target request, and presents the rendered multimedia data stream on the livestream page of the corresponding client. However, in most cases, the client device to which the multimedia data stream belongs is a mobile terminal, which has certain limitations and may result in slow rendering, leading to problems such as stuttering, latency, and lag in the image. Based on this, the multimedia data stream requiring rendering processing may be sent to a higher-performance target device, to cause the target device to perform rendering processing on the multimedia data stream based on the target request. Therefore, video rendering can be performed on various types of terminal devices, thereby improving the universality of the video rendering process and enhancing the processing efficiency and rendering effect of the multimedia data stream.

In practical applications, during presentation of the multimedia data stream on the livestream page, a plurality of interaction requests associated with the livestream page may be generated. Among these interaction requests, there may exist requests that match the target request, as well as requests that do not match the target request. Then, when an interaction request associated with the livestream page is received, detection may be performed on the interaction request to determine whether the interaction request matches the target request. Further, in response to determining that the target request is received, the obtained multimedia data stream may be sent to the target device, to cause the target device to perform rendering processing on the received multimedia data stream based on the target request.

In this embodiment, sending the obtained multimedia data stream to the target device, to cause the target device to perform rendering processing on the multimedia data stream based on the target request includes: sending the obtained multimedia data stream and the target request to the target device, to cause the target device to retrieve a corresponding rendering data package based on the target request, and to perform rendering processing on the multimedia data stream based on the rendering data package.

The rendering data package may include data associated with the rendering processing procedure. In practical applications, after a plurality of target requests are determined, rendering processing procedure data corresponding to each target request may respectively be configured and encapsulated into a data package, thereby obtaining a rendering data package corresponding to each target request. Further, after each target request is determined, an association relationship may be established between the target request and the rendering data package corresponding to the respective target request, and the rendering data package may be stored in the target device. Then, after the target device receives the target request sent by the client to which the multimedia data stream belongs, the corresponding rendering data package may be retrieved based on the target request and the pre-established association relationship.

In practical applications, in response to receiving the target request, the obtained multimedia data stream and the received target request may be sent to the target device. Then, in response to the target device receiving the multimedia data stream and the target request, the rendering data package corresponding to the target request may be retrieved based on the received target request and the pre-established data package association relationship. Subsequently, rendering processing may be performed on the received multimedia data stream based on the retrieved rendering data package, thereby obtaining the multimedia data stream to be pushed. Then, the multimedia data stream to be pushed may be processed based on actual requirements. The benefits of such a configuration are as follows: the data processing efficiency and processing quality of interactive data streams with high performance requirements are improved, and the rendering real-time performance of the multimedia data stream is ensured, thereby improving the rendering and display effect of the multimedia video stream.

For example, an example may be used to describe the rendering processing procedure where the target request is the rendering effect request, and the obtained multimedia data stream is the livestream image. The livestream image and a hair accessory effect rendering request corresponding to a triggered hair accessory effect may be sent to the target device. Then, after the target device receiving the livestream image and the hair accessory effect rendering request, a rendering data package corresponding to the hair accessory effect rendering request may be retrieved, and rendering processing may be performed on the livestream image based on the retrieved rendering data package. Therefore, the multimedia data stream to be pushed, that is, the livestream image rendered with the hair accessory effect, can be obtained.

According to the technical solutions of this embodiment of the present disclosure, the multimedia data stream is obtained, and further, the obtained multimedia data stream is sent to the target device in response to receiving the target request, to cause the target device to perform rendering processing on the multimedia data stream based on the target request, to obtain the multimedia data stream to be pushed. This solves the problem in the related art in which rendering the livestream page requires high performance of the terminal device, resulting in high video processing costs and poor universality. This enables effective rendering of the image content without imposing performance requirements on the terminal device, thereby improving the universality and efficiency of video processing.

FIG. 2 is a schematic flowchart of another multimedia data stream processing method according to an embodiment of the present disclosure. In the technical solutions of this embodiment, on the basis of the above-mentioned embodiment, after the multimedia data stream to be pushed is obtained, the multimedia data stream may be pushed based on a streaming manner corresponding to the target device. Details about technical features that are the same as or similar to those in the above-mentioned embodiment are not repeated herein.

As shown in FIG. 2, the method in this embodiment may specifically include the following steps.

S210: a multimedia data stream is obtained.

S220: the obtained multimedia data stream is sent to a target device in response to receiving a target request, to cause the target device to perform rendering processing on the multimedia data stream based on the target request, to obtain a multimedia data stream to be pushed.

S230: the multimedia data stream is pushed based on a streaming manner corresponding to the target device.

In practical applications, in order to display the multimedia data stream to be pushed on a corresponding client, after the multimedia data stream is obtained, the multimedia data stream may also be screamed, so that the multimedia data stream is pushed to the corresponding client.

In this embodiment, the streaming manner may be used to indicate the process of pushing the multimedia data stream to a corresponding service end, that is, the method of performing streaming. Those skilled in the art may understand that streaming refers to the process of transmitting encapsulated content to a server. Streaming is a real-time streaming media transmission technology that enables users to transmit audio and video online, thereby allowing other users to view specified video streams and audio streams over the network. The streaming manner may include a plurality of types, optionally including a direct streaming manner and an indirect streaming manner. The direct streaming manner may be understood as directly pushing the multimedia data stream to the corresponding service end. The indirect streaming manner may be understood as first sending the multimedia data stream to the client to which the multimedia data stream belongs, and then pushing the multimedia data stream to the corresponding service end based on the client.

It should be noted that streaming has high network requirements. If the network is unstable, the streaming performance may degrade. Therefore, the configuration of the streaming manner may be associated with a local area network to which the target device belongs. If the network environment of the local area network is relatively stable, a streaming operation may be directly performed, that is, the streaming manner may be configured as the direct streaming manner. If the network environment of the local area network is poor or the target device is in an offline state, performing the direct streaming operation would may result in poor streaming performance. Therefore, the streaming manner may be configured as the indirect streaming manner.

It should also be noted that the configuration of the streaming manner may be associated with actual requirements. That is, the user may configure a corresponding streaming manner by performing a streaming manner configuration operation, to cause the target device to push a corresponding multimedia data stream based on the streaming manner configured by the user.

In practical applications, after the multimedia data stream to be pushed is obtained, the streaming manner corresponding to the target device may be determined. Then, the multimedia data stream may be screamed based on the streaming manner.

It should be noted that the streaming manner may include at least two types. The following describes the pushing processes of the multimedia data stream based on the two streaming manners respectively.

Optionally, the streaming manner includes the direct streaming manner, and pushing the multimedia data stream based on the streaming manner corresponding to the target device includes: sending the multimedia data stream to a target service end or a streaming service end based on the target device, to cause the target service end or the streaming service end to push the multimedia data stream to a streamer end and/or a viewer end.

The target service end may be understood as a program serving a client associated with the multimedia data stream. A device that runs the target service end may be referred to as a target service. The streaming service end may be understood as a service end deployed with a content delivery network (CDN) interface. The streamer end may be a client of a user to whom the multimedia data stream belongs. The viewer end may be a client of a user viewing the multimedia data stream.

In practical applications, when the streaming manner corresponding to the target device is the direct streaming manner, it indicates that the multimedia data stream can be directly pushed to the corresponding service end based on the target device. Specifically, after the multimedia data stream to be pushed is obtained, the multimedia data stream may be sent to the target service end or the streaming service end based on the target device. Then, the multimedia data stream may be pushed to the streamer end and/or the viewer end based on the target service end or the streaming service end, to present the multimedia data stream on a display interface corresponding to each client. It should be noted that, in the case that the streaming manner is the direct streaming manner, in order to enable a client that sends the multimedia data stream to the target device to also receive the multimedia data stream, the target service end or the streaming service end may push the multimedia data stream to the client of the user to whom the multimedia data stream belongs, that is, the streamer end.

For example, with reference to the above-mentioned example, after the livestream image rendered with the hair accessory effect is obtained, the livestream image may be sent to the target service end or the streaming service end based on the target device. Then, the livestream image may be pushed to the streamer end and/or the viewer end based on the target service end or the streaming service end, to present the livestream page rendered with the hair accessory effect on a display interface of a client to which a livestream viewer belongs and a display interface of a client to which a streamer belongs.

It should be noted that the advantage of pushing the multimedia data stream based on the direct streaming manner is that: the data stream is directly pushed to the service end based on a data stream rendering device, thereby improving the data rendering efficiency and rendering effect, and further improving the streaming efficiency and the presentation effect of the data stream on the client.

Optionally, the streaming manner includes the indirect streaming manner, and pushing the multimedia data stream based on the streaming manner configured in the target device includes: receiving and presenting the multimedia data stream that is sent by the target device, and sending the multimedia data stream to the target service end or the streaming service end, to cause the target service end or the streaming service end to push the multimedia data stream to the viewer end.

In practical applications, in the case that the streaming manner corresponding to the target device is the indirect streaming manner, it indicates that the multimedia data stream cannot be directly pushed to the corresponding service end, and it is required to first send the multimedia data stream to a device end capable of performing streaming, to enable the device end to push the received multimedia data stream to the corresponding service end. Specifically, after the multimedia data stream to be pushed is obtained, the multimedia data stream may be fed back to a client to which the multimedia data stream belongs, that is, a client that sends the obtained multimedia data stream. Then, the multimedia data stream that is sent by the target device may be presented based on the client, and the received multimedia data stream may be sent to the target service end or the streaming service end based on the client. Then, the multimedia data stream may be pushed to the viewer end based on the target service end or the streaming service end, to present the received multimedia data stream on the display interface corresponding to each viewer end.

For example, with reference to the above-mentioned example, after the livestream image rendered with the hair accessory effect is obtained, the livestream image may be fed back to the client of the streamer based on the target device, to present the livestream image rendered with the hair accessory effect on the display interface of the client of the streamer. Then, the livestream image may be sent to the target service end or the streaming service end based on the client of the streamer. Then, the livestream image may be pushed to a client of a livestream viewer based on the target service end or the streaming service end, to present the livestream page rendered with the hair accessory effect on a display interface of the client to which the livestream viewer belongs.

It should be noted that the advantage of pushing the multimedia data stream based on the indirect streaming manner is that: the data stream is screamed based on the client to which the data stream belongs, thereby improving the presentation effect of the data stream on the data stream viewing end.

According to the technical solutions of this embodiment of the present disclosure, the multimedia data stream is obtained, and then the obtained multimedia data stream is sent to the target device in response to receiving the target request, so that the target device performs rendering processing on the multimedia data stream based on the target request to obtain the multimedia data stream to be pushed. Further, the multimedia data stream is pushed based on the streaming manner corresponding to the target device. This enables effective rendering of the image content without imposing performance requirements on the terminal device, and enables effective screaming of the rendered data stream to present the rendered data stream, thereby improving the streaming efficiency and the presentation effect of the data stream.

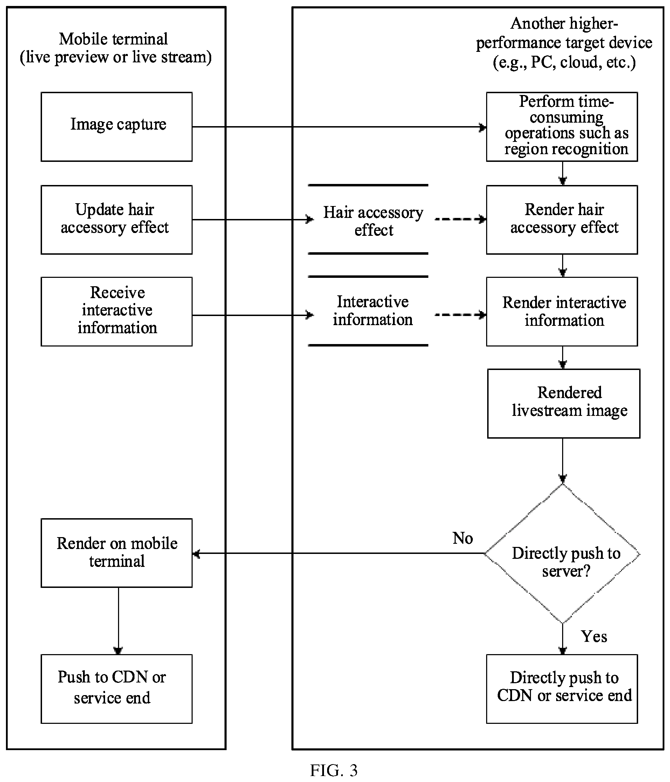

FIG. 3 is a schematic flowchart of a multimedia data stream processing method according to an embodiment of the present disclosure. This embodiment of the present disclosure is an optional embodiment of the above embodiments. The multimedia data stream processing method may be described with an example in which the multimedia data stream is the livestream image, and the received target requests are a hair accessory effect rendering request and an interactive gift receiving request. As shown in FIG. 3, a process of executing the method provided in this embodiment of the present disclosure may be as follows.

During presentation of the livestream image on the client (e.g., mobile terminal) to which the user (streamer and/or viewer) belongs, the livestream image may be obtained. Then, in response to receiving the hair accessory effect rendering request (updating the hair accessory effect), the obtained livestream image and the triggered hair accessory effect may be sent to a higher-performance target device (e.g., PC terminal or cloud). Then, time-consuming operations such as region recognition may be performed on the livestream image based on the target device, and the received hair accessory effect may be rendered onto the livestream image, to render the hair accessory effect onto the hair region included in the livestream image. Further, if the interactive gift receiving request is received (receiving an interactive gift) again, the obtained livestream image and the triggered interactive gift may be sent to the target device. Then, a preset animation corresponding to the received interactive gift may be rendered onto the livestream image, thereby obtaining the livestream image rendered with the hair accessory effect and the preset animation of the interactive gift. Further, a pre-configured streaming manner may be determined. If the streaming manner is the direct streaming manner, the livestream image may be sent to the target service end or a CDN end, to push the livestream image to the streamer end and the viewer end based on the target service end or the CDN end. If the streaming manner is the indirect streaming manner, the livestream image may be fed back to the streamer end, to display the livestream image based on the client. Then, the livestream image may be sent to the target service end or the CDN end based on the client, to push the livestream image to the viewer end based on the target service end or the CDN end.

According to the technical solutions of this embodiment of the present disclosure, the multimedia data stream is obtained, and further, the obtained multimedia data stream is sent to the target device in response to receiving the target request, to cause the target device to perform rendering processing on the multimedia data stream based on the target request to obtain the multimedia data stream to be pushed. This solves the problem in the related art in which rendering the livestream page requires high performance of the terminal device, resulting in high video processing costs and poor universality. This enables effective rendering of the image content without imposing performance requirements on the terminal device, thereby improving the universality and efficiency of video processing.

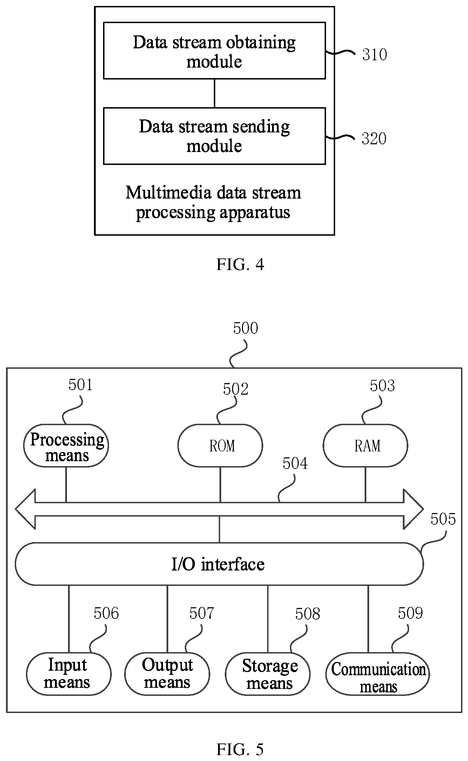

FIG. 4 is a schematic structural diagram of a multimedia data stream processing apparatus according to an embodiment of the present disclosure. As shown in FIG. 4, the apparatus includes: a data stream obtaining module 310 and a data stream sending module 320.

The data stream obtaining module 310 is configured to obtain a multimedia data stream, where the multimedia data stream includes an audio stream and/or a video stream. The data stream sending module 320 is configured to send the obtained multimedia data stream to a target device in response to receiving a target request, to cause the target device to perform rendering processing on the multimedia data stream based on the target request, to obtain a multimedia data stream to be pushed.

On the basis of the above-mentioned optional technical solutions, optionally, the apparatus is configured at a streamer end, and the multimedia data stream to be pushed is the data stream to be pushed to the streamer end and/or a viewer end.

On the basis of the above-mentioned optional technical solutions, optionally, the target request includes at least one of: a rendering effect request, a resource transfer request, or a livestream interaction request.

On the basis of the above-mentioned optional technical solutions, optionally, the data stream sending module 320 is specifically configured to send the obtained multimedia data stream and the target request to the target device, to cause the target device to retrieve a corresponding rendering data package based on the target request, and to perform rendering processing on the multimedia data stream based on the rendering data package.

On the basis of the above-mentioned optional technical solutions, optionally, the apparatus includes: a data stream pushing module.

The data stream pushing module is configured to: after the multimedia data stream to be pushed is obtained, push the multimedia data stream based on the streaming manner corresponding to the target device.

On the basis of the above-mentioned optional technical solutions, optionally, the streaming manner includes a direct streaming manner. The data stream pushing module includes: a direct streaming unit.

The direct streaming unit is configured to send the multimedia data stream to the target service end or the streaming service end based on the target device, to cause the target service end or the streaming service end to push the multimedia data stream to the streamer end and/or the viewer end.

On the basis of the above-mentioned optional technical solutions, optionally, the streaming manner includes an indirect streaming manner. The data stream pushing module includes: an indirect streaming unit.

The indirect streaming unit is configured to receive and present the multimedia data stream that is sent by the target device, and send the multimedia data stream to the target service end or the streaming service end, to cause the target service end or the streaming service end to push the multimedia data stream to the viewer end.

On the basis of the above-mentioned optional technical solutions, optionally, the streamer end obtaining the multimedia data stream and the target device correspond to the same local area network.

On the basis of the above-mentioned optional technical solutions, optionally, the target device is a device satisfying preset processing conditions.

According to the technical solutions of this embodiment of the present disclosure, the multimedia data stream is obtained, and further, the obtained multimedia data stream is sent to the target device in response to receiving the target request, to cause the target device to perform rendering processing on the multimedia data stream based on the target request, to obtain the multimedia data stream to be pushed. This solves the problem in the related art in which rendering the livestream page requires high performance of the terminal device, resulting in high video processing costs and poor universality. This enables effective rendering of the image content without imposing performance requirements on the terminal device, thereby improving the universality and efficiency of video processing.

The multimedia data stream processing apparatus provided in this embodiment of the present disclosure can perform the multimedia data stream processing method according to any of the embodiments of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

FIG. 5 is a schematic structural diagram of an electronic device according to an embodiment of the present disclosure. Reference is made to FIG. 5 below, which is a schematic structural diagram of an electronic device (such as a terminal device or a server in FIG. 5) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 5 is merely an example, and shall not impose any limitation on the function and scope of use of the embodiments of the present disclosure.

As shown in FIG. 5, the electronic device 500 may include a processing means (for example, a central processing unit or a graphics processing unit) 501 that may perform a variety of appropriate actions and processing in accordance with a program stored in a read-only memory (ROM) 502 or a program loaded from a storage means 508 into a random-access memory (RAM) 503. The RAM 503 further stores various programs and data required for the operation of the electronic device 500. The processing means 501, the ROM 502, and the RAM 503 are connected to one another through a bus 504. An input/output (I/O) interface 505 is also connected to the bus 504.

Generally, the following means may be connected to the I/O interface 505: an input means 506 including, for example, a touchscreen, a touchpad, a keyboard, a mouse, a camera, a microphone, an accelerometer, and a gyroscope; an output means 507 including, for example, a liquid crystal display (LCD), a speaker, and a vibrator; the storage means 508 including, for example, a magnetic tape and a hard disk drive; and a communication means 509. The communication means 509 may allow the electronic device 500 to perform wireless or wired communication with other devices to exchange data. Although FIG. 5 shows the electronic device 500 having various means, it should be understood that it is not required to implement or have all of the shown means. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 509, installed from the storage means 508, or installed from the ROM 502. When the computer program is executed by the processing means 501, the above-mentioned functions defined in the method of the embodiments of the present disclosure are performed.

The names of messages or information exchanged between a plurality of apparatuses in the implementations of the present disclosure are used for illustrative purposes only, and are not used to limit the scope of these messages or information.

The electronic device according to this embodiment of the present disclosure and the multimedia data stream processing method according to the above embodiment belong to the same inventive concept. For the technical details not exhaustively described in this embodiment of the present disclosure, reference may be made to the above embodiment, and this embodiment and the above embodiment have the same beneficial effects.

An embodiment of the present disclosure provides a computer storage medium storing a computer program thereon, where the program, when executed by a processor, causes the multimedia data stream processing method according to the above embodiment to be implemented.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: obtain a multimedia data stream, where the multimedia data stream includes an audio stream and/or a video stream; and send the obtained multimedia data stream to a target device in response to receiving a target request, to cause the target device to perform rendering processing on the multimedia data stream based on the target request, to obtain a multimedia data stream to be pushed.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A multimedia data stream processing method, comprising:
obtaining a multimedia data stream, wherein the multimedia data stream comprises an audio stream and/or a video stream; and
sending the obtained multimedia data stream to a target device in response to receiving a target request, to cause the target device to perform rendering processing on the multimedia data stream based on the target request, to obtain a multimedia data stream to be pushed.

2. The method according to claim 1, wherein the method is applied to a streamer end, and the multimedia data stream to be pushed is a data stream to be pushed to the streamer end and/or a viewer end.

3. The method according to claim 1, wherein the target request comprises at least one of:
a rendering effect request, a resource transfer request, or a livestream interaction request.

4. The method according to claim 1, wherein sending the obtained multimedia data stream to the target device, to cause the target device to perform the rendering processing on the multimedia data stream based on the target request comprises:
sending the obtained multimedia data stream and the target request to the target device, to cause the target device to retrieve a corresponding rendering data package based on the target request, and perform the rendering processing on the multimedia data stream based on the rendering data package.

5. The method according to claim 1, further comprising, after obtaining the multimedia data stream to be pushed:
pushing the multimedia data stream based on a streaming manner corresponding to the target device.

6. The method according to claim 5, wherein the streaming manner comprises a direct streaming manner, and pushing the multimedia data stream based on the streaming manner corresponding to the target device comprises:
sending the multimedia data stream to a target service end or a streaming service end based on the target device, to cause the target service end or the streaming service end to push the multimedia data stream to a streamer end and/or a viewer end.

7. The method according to claim 5, wherein the streaming manner comprises an indirect streaming manner, and pushing the multimedia data stream based on the streaming manner configured in the target device comprises:
receiving and presenting the multimedia data stream that is sent by the target device, and sending the multimedia data stream to a target service end or a streaming service end, to cause the target service end or the streaming service end to push the multimedia data stream to a viewer end.

8. The method according to claim 1, wherein a streamer end obtaining the multimedia data stream and the target device correspond to the same local area network.

9. The method according to claim 1, wherein the target device is a device satisfying preset processing conditions.

10. A multimedia data stream processing apparatus, comprising:
a data stream obtaining module, configured to obtain a multimedia data stream, wherein the multimedia data stream comprises an audio stream and/or a video stream; and
a data stream sending module, configured to send the obtained multimedia data stream to a target device in response to receiving a target request, to cause the target device to perform rendering processing on the multimedia data stream based on the target request, to obtain a multimedia data stream to be pushed.

11. An electronic device, comprising:
one or more processors; and
a storage configured to store one or more programs, wherein
the one or more programs, when executed by the one or more processors, cause the one or more processors to implement the multimedia data stream processing method according to any of claims 1 to 9.

12. A storage medium comprising computer-executable instructions, wherein the computer-executable instructions, when executed by a computer processor, perform the multimedia data stream processing method according to any of claims 1 to 9.
